# EUROPÄISCHE PATENTSCHRIFT

(11) **EP 0 879 403 B1**
(45) Veröffentlichungstag und Bekanntmachung des Hinweises auf die Patenterteilung: **20.06.2001**
(21) Anmeldenummer: 97902326.4
(22) Anmeldetag: 05.02.1997
(51) Int. Cl.: G01K 1/08

(54) **VERFAHREN ZUR HERSTELLUNG EINER SCHUTZKAPPE FÜR EIN IN EINE KÖRPERHÖHLE EINBRINGBARES INFRAROT-STRAHLUNGSTHERMOMETER**
PROCESS FOR PRODUCING A PROTECTIVE CAP FOR AN INFRARED RADIATION THERMOMETER THAT CAN BE INTRODUCED INTO A BODY CAVITY
PROCEDE DE PRODUCTION D'UN CAPUCHON DE PROTECTION POUR THERMOMETRE A INFRAROUGE A INSERER DANS UNE CAVITE DU CORPS

(30) Priorität: 06.02.1996 DE 19604200
(43) Veröffentlichungstag der Anmeldung: 25.11.1998
(73) Patentinhaber: Braun GmbH, Kronberg (DE)
(72) Erfinder: KRAUS, Bernhard, D-35619 Braunfels (DE); HONNEFELLER, Katja, D-61381 Friedrichsdorf (DE); GÖRICH, Gerald, D-64331 Weiterstadt (DE); ZIMMERMANN, Walter, D-65812 Bad Soden (DE); BEERWERTH, Frank, D-65594 Runkel (DE)
(74) Vertreter: Bautz, Günther
(86) Internationale Anmeldenummer: EP9700505
(87) Internationale Veröffentlichungsnummer: WO9729350

(56) Entgegenhaltungen:
- EP-A- 0 419 100
- EP-A- 0 472 490
- EP-A- 0 637 430

## Beschreibung

Die vorliegende Erfindung betrifft Verfahren zur Herstellung einer auf eine Ohrkanal-Temperaturmeßsonde eines Infrarot-Strahlungsthermometers aufsetzbaren becherförmigen Schutzkappe, die in eine Körperhöhle einbringbar ist, und einen rohrförmigen Grundkörper aus Kunststoff aufweist, dessen eines Ende offen und dessen gegenüberliegendes Ende mit einer für Infrarotstrahlung durchlässigen Fenster-Folie abgeschlossen ist.

Die Körpertemperatur wird unter anderem mit elektronischen Strahlungsthermometern gemessen. Typischerweise weist ein solches Strahlungsthermometer ein Gehäuse mit einem Strahlungseintrittsfenster, einer inneren Optik und einem Infrarot-Sensor, der einer Auswerteeinheit zugeordnet ist, auf. Das Strahlungseintrittsfenster dient dazu, das Innere des Gehäuses des Strahlungsthermometers abzuschließen und so die Optik und den Sensor vor Verschmutzung und Zerstörung zu schützen. Zur Bestimmung der Körpertemperatur einer Person wird das vordere Ende des Thermometers in das Ohr gerichtet. Die vom Trommelfell und dem Ohrkanal emittierte Infrarot-Strahlung tritt in das Thermometer über das Fenster ein und fällt über die Optik bzw. einen Lichtleiter und ein Interferenzfilter auf den Infrarot-Sensor. Die im Sensor hervorgerufene Temperaturerhöhung hat eine elektrische Ausgangsspannung zur Folge, aus der, über eine Auswerteeinheit, die Strahlungstemperatur bestimmt werden kann.

Als weiterer Schutz werden Schutzkappen der eingangs genannten Art auf das Ende des Thermometers aufgesetzt, also beispielsweise über die Ohrkanalsonde eines infrarot-strahlungsempfindlichen Mittelohr-Thermometers geschoben; solche Schutzkappen sind beispielsweise in der EP-B-0201790 beschrieben. Diese Schutzkappen dienen nicht nur zum Schutz des die Infrarot-Strahlung durchlassenden Fensters, sondern sollen den Benutzer auch vor einer Krankheitsübertragung schützen, indem vor einer Temperaturmessung oder vor einer Messung der Temperatur bei wechselnden Personen jeweils eine neue Schutzkappe aufgesetzt wird. Die in der EP-B-0201790 beschriebene Schutzkappe weist eine infrarotdurchlässige Membran auf, die aus Polypropylen oder Polyethylen besteht. Das Teil, das die Membran trägt, ist ein spritzgegossenes Teil.

Da solche Schutzkappen in der Regel Einweg-Schutzkappen sind, werden sie nach deren Gebrauch entfernt und entsorgt, um für die nächste Temperaturmessung eine neue Schutzkappe auf das Thermometer aufzusetzen, sollte es sich bei solchen Schutzkappen um einen kostengünstigen Gegenstand handeln. Die wesentlichen Kosten bei der Herstellung solcher Schutzkappen werden nicht durch die Materialkosten hervorgerufen, sondern durch den Fertigungsablauf. Üblicherweise werden solche Schutzkappen dadurch hergestellt, daß ein Grundkörper aus Kunststoff rohrförmig gespritzt wird und anschließend das eine, offene Ende dieses Grundkörpers mit einer Fenster-Folie, die für infrarote Strahlung durchlässig ist, verschlossen wird. Auf eine solche Herstellung einer Schutzkappe mittels Spritzgießen ist in der US-5,293,862 hingewiesen.

Aus der EP-A-0589212 und der EP-A-0637430 sind flache Schutzkappen bekannt, die aus zwei oder drei flach übereinanderliegenden Folien bestehen. In der Mitte der ersten Folie ist ein Loch vorhanden. Die zweite Folie ist infrarotdurchlässig und mit der ersten Folie an den Ecken verschweißt. Erst wenn ein Benutzer eine derartige flache Schutzkappe auf die Ohrkanalsonde eines Strahlungsthermometers aufzieht, indem er mit dem Ende der Ohrkanalsonde die zweite infrarotdurchlässige Folie durch das Loch in der ersten Folie drückt, erhält die flache Schutzkappe eine der aüßeren Form der Ohrkanalsonde entsprechende becherförmige Gestalt. Wird nach der Messung die Schutzkappe wieder von der Ohrkanalsonde entfernt, geht ihre becherförmige Form wieder verloren.

Ausgehend von dem vorstehend angeführten Stand der Technik und den bekannten Herstellverfahren für solche Schutzkappen liegt der vorliegenden Erfindung die Aufgabe zugrunde, Verfahren anzugeben, mit denen aus unterschiedlichen Materialien becherförmige Schutzkappen kostengünstig hergestellt werden können.

Die vorstehende Aufgabe wird durch die Verfahren mit den in den Ansprüchen 1 oder 21 aufgeführten Merkmalen gelöst.

Beim erfindungsgemäßen Verfahren nach Anspruch 1 wird der Grundkörper aus einem blatt-, bahnen- oder plattenförmigen Grundkörper-Material hergestellt und mit einer Fensterfolie versehen. Solche Materialien können kontinuierlich einer Fertigungslinie zugeführt und darauffolgend Stanz-, Verformungs- und Schneidvorgängen unterworfen werden. Dieser Zweischichtaufbau ermöglicht die Fensterausbildung bei gleichzeitiger Anbringung einer Wärmeisolation an der äußeren Schicht. Bei einem derartigen Verfahren lassen sich vom Band in kürzester Zeit viele Schutzkappen fortlaufend produzieren. Abkühlzeiten, wie sie beim Spritzgießen von solchen Teilen bekannt sind, entfallen hier. Das Grundkörper-Material kann auch vollständig von einer Schaumstoffolie oder einer sonstigen mit Lufteinschlüssen versehenen Kunststoffolie abgedeckt sein, bei der dann zur besseren Durchlässigkeit von Infrarotstrahlung der Fensterbereich durch Heißprägen oder Pressen verdünnt wird.

Falls bahnenartiges Material, das eine gewisse Flexibilität aufweist, verwendet wird, so kann dieses Bahnenmaterial von einer Vorratsrolle abgewickelt werden (Anspruch 5), vorzugsweise in Form eines auf der Vorratsrolle bevorrateten, endlosen Bands (Anspruch 7). Es besteht aber auch die Möglichkeit, das Material, zumindest dasjenige für den Grundkörper, von einem Stapel wegzunehmen und den nachfolgenden Bearbeitungsstationen kontinuierlich zuzuführen.

Gemäß der ersten Verfahrensweise zur Herstellung von Schutzkappen wird das Grundkörper-Material in einem ersten Schritt zunächst mit Löchern versehen, in dem diese ausgestanzt werden (Anspruch 2). Diese Löcher sind jeweils dem offenen Ende des zu formenden Grundkörpers, aus dem die Schutzkappe gefertigt wird, zugeordnet.

Wie eingangs anhand des Standes der Technik beschrieben ist, weisen solche Schutzkappen ein folienartiges Fenster auf, das möglichst dünn sein und für die Strahlung im relevanten Meßbereich durchlässig sein soll. Zur Bildung der Fenster wird in einem zweiten Schritt, nachdem in das Grundkörper-Material die Löcher eingestanzt sind (Anspruch 2) eine Fenster-Folie zugeführt, die vorzugsweise eine Dicke im Bereich von 20 bis 50 µm besitzt (Anspruch 9), und das gelochte Grundkörper-Material und die Fenster-Folie werden durch Schweißen (Anspruch 3) und/oder durch Kleben (Anspruch 4) miteinander verbunden.

Es ist nicht unbedingt erforderlich, das Grundkörper-Material und das Folien-Material flächig miteinander zu verbinden, sondern es kann ausreichend sein, zumindest diese Verbindung im Randbereich des Lochs vorzunehmen. Wesentlich ist, daß die Folie nicht unterschiedlich dick von Schutzkappe zu Schutzkappe ist; denn solche Dickenunterschiede können das Meßergebnis mit einem Strahlungsthermometer, bei dem eine solche Schutzkappe mit einer Fenster-Folie aufgesetzt wird, beeinflussen. Gerade im Hinblick darauf, daß bahnenförmiges Folien-Material zugeführt wird, ist ein gleichmäßiges Glätten und definiertes Aufbringen der Folie auf dem Grundkörper-Material möglich, da mit relativ großflächigen Materialien gearbeitet wird, die in einer Ebene aufeinandergefügt werden.

Es ist ersichtlich, daß die Löcher nicht nur in einer Reihe in dem Grundkörper-Material gebildet werden können, sondern bevorzugt in einer Feldanordnung gebildet werden, bei der quer zur Fertigungsrichtung mehrere Reihen Löcher gestanzt werden. Als Grundkörper-Material wird vorzugsweise eine Folie rnit einer Dicke im Bereich von 0,4 bis 0,8 mm (Anspruch 8) zugeführt. Bevorzugt besteht das Grundkörper-Material aus einem Kunststoff, insbesondere Polyethylen oder Polystyrol (Anspruch 11).

Nachdem das Grundkörper-Material und die Fenster-Folie miteinander in dem zweiten Schritt verbunden sind, wird das so vorbereitete Vormaterial einer dritten Bearbeitungsstation zugeführt, wo durch Tiefziehen die Schutzkappe geformt wird (Anspruch 13), wobei, entsprechend der Feldaufteilung der gestanzten Löcher, jeweils ein ganzes Feld tiefgezogener Formen erzeugt werden kann und jeder tiefgezogenen Form jeweils ein Fenster zugeordnet ist. Schließlich wird das noch zusammenhängende, tiefgezogene Feld aus Grundkörpern einem vierten Bearbeitungsschritt unterworfen, wo die einzelnen Schutzkappen auf Endabmessungen bearbeitet werden, indem sie beispielsweise ausgestanzt werden.

Es hat sich gezeigt, daß der Verfahrensablauf dadurch beschleunigt werden kann, daß nach dem Verformen der Vormaterialien, jedoch vor der Bearbeitung auf Endabmessung, eine eingefügte Qualitätskontrolle den Verfahrensablauf beschleunigen kann. Dies trifft insbesondere dann zu, wenn in der Fertigungslinie nur eine fortlaufend gestanzte Reihe Löcher in das bahn- oder plattenförmige Material eingebracht wird. Da ein kritischer Verfahrensschritt die Verformung des Vormaterials ist, nachdem der Grundkörper und die Folie miteinander verbunden sind, wobei Qualitätsbeeinflussungen nicht auszuschließen sind, wird vor der Bearbeitung der Vormaterialien auf End- abmessung eine Qualitätskontrolle vorgenommen, im Rahmen derer an einer Meßstation die Transmissionseigenschaften der Folien geprüft werden und solche Folien markiert werden, die die geforderten Transmissionseigenschaften im Rahmen der zu erfüllenden Meßgenauigkeiten nicht erreichen. In dem Verfahrensablauf ist es dann nicht erforderlich, solche, die Qualitätsanforderungen nicht erfüllenden Vorformen auf Endabmessungen zu bearbeiten, sondern sie von der Endbearbeitung auszuschließen (Ansprüche 17 und 18).

Mit der vorstehend angegebenen Verfahrensweise können nicht nur folienartige oder plattenartige Materialien verarbeitet werden, sondern es eignen sich hierzu auch gut wärmeisolierende Materialien (Anspruch 14), wie beispielsweise Schaumstoffe (Anspruch 15). Es hat sich erwiesen, daß Schutzkappen aus gut wärmeisolierenden Materialien, wozu Schaumstoffe zu zählen sind, dazu beitragen, daß während der Messung der Körpertemperatur Meßfehler aufgrund von äußeren Wärmeeinflüssen weitgehendst vermieden werden können. Gerade der Bereich des Grundkörpers, der unmittelbar dem Fenster benachbart ist, der also in innigem Kontakt mit der Wand der Körperhöhlung, zum Beispiel des Ohrkanals, gelangt, wird derart isoliert, daß die Wärmeübertragung in diesem Bereich in die Infrarotoptik verringert bzw. so gering gehalten wird, daß sie in Bezug auf eine Beeinflussung der Temperaturmessung vernachlässigbar ist. Da diese Schutzkappe den Wärmeeintrag verringert, wird auch gleichzeitig die Abkühlung, beispielsweise des Ohrkanals, herabgesetzt. Dies hat auch zur Folge, daß durch die verringerte Ohrabkühlung von dem Benutzer das Thermometer mit dieser Schutzkappe als wärmer und daher wesentlich angenehmer empfunden wird. Weiterhin kann dieses wärmeisolierende Mittel weich ausgestaltet werden und ist im Ohr angenehmer als ein festes, unnachgiebiges Material bzw. eine damit umhüllte Schutzkappe. Ein weiterer Vorteil einer solchen Schutzkappe besteht insbesondere dann, wenn sie in Verbindung mit einem Fieberthermometer mit einer kleinen Temperaturmeßsonde angewandt wird. Ein Fieberthermometer mit einer kleinen Temperaturmeßsonde eignet sich sowohl zur Temperaturmessung bei Erwachsenen als auch bei Kindern, indem diese Schutzkappe aus wärmeisolierendem Material in zumindest zwei Größen bereitgestellt wird. Eine solche Schutzkappe kann aber auch aus einem besonders weichen, wärmeisolierenden und damit nachgiebigen Material gefertigt werden, das sich sowohl bei Erwachsenen als auch bei Kindern an deren jeweiligen Ohrkanal, trotz der unterschiedlichen Größe, anpaßt.

Wärmeisolierendes Material als Schaumstoff bietet den Vorteil, daß die wärmeisolierenden Eigenschaften, insbesondere durch die Art des Schaumstoffs in Bezug auf Porengröße und damit Anteil der Luft sowie in Bezug auf offenporigen oder geschlossenporigen Schaumstoff (geschlossenporiger Schaumstoff ist zu bevorzugen) eingestellt werden kann. Weiterhin ist es möglich, Schaumstoffmaterialien durch Prägen und insbesondere unter Wärmezuführung irreversibel zu verformen, so daß insbesondere Randbereiche dieses Grundkörpers verdünnt (beispielsweise im Bereich des Loches, auf das die Folie aufgebracht wird) oder wulstartig verdickt werden können (z.B. am unteren, der Fensteröffnung gegenüberliegenden Rand der Einwegkappe). (Siehe Ansprüche 16, 19 und 20).

Während insbesondere vorstehend die Verfahrensvariante zu der Herstellung einer Schutzkappe ausgehend von einem Grundkörper-Material und einem Folienmaterial, die miteinander verbunden werden, beschrieben wurde, besteht eine alternative Verfahrensweise zum fortlaufenden Herstellen von Schutzkappen darin, von einem einzigen Material auszugehen, aus dem die Schutzkappe mit dem folienartigen Fenster hergestellt wird (Anspruch 21). Die Verfahrensschritte eines Prägens, wie sie bereits vorstehend unter Beschreibung der ersten Verfahrensweise angegeben sind, können dazu verwendet werden, ausgehend von einem gut verformbaren Grundkörpermaterial, das darüberhinaus entsprechend verdünnt eine Transmissionsfähigkeit für Infrarot-Strahlung besitzt, so prägend zu verformen, daß Grundkörper und Fenster-Folie aus einem einteiligen Körper gebildet sind.

Die Verdünnung des Ausgangsmaterials im Bereich des Fensters wird vorzugsweise in mehreren einzelnen, heiß- oder kaltprägenden Verformungsschritten (Anspruch 22) vorgenommen. Dünneres Material im Bereich der Fensterfolie führt dazu, daß mit geringerer Dicke der Folie mögliche Eigenemissionen verhindert werden, die ansonsten die auf die Sensorik eines Strahlungsthermometers einfallenden Strahlungsanteile, die der vom Körper abgegebenen Wärmestrahlung zuzuordnen sind, verfälschen könnten.

Im Rahmen dieser letzteren Verfahrensweise wird vorzugsweise die Verdünnung desjenigen Bereichs des Ausgangsmaterials, das der Fenster-Folie zugeordnet ist, auf Endabmessung in dem Tiefziehschritt (Anspruch 23) vorgenommen, so daß sichergestellt werden kann, daß die geforderten Dicken der Folie eingehalten werden, die ansonsten durch diesen abschließenden Tiefziehschritt, falls die Folie bereits zuvor auf ihre Endabmessungen geprägt wurde, beeinflußt werden könnten.

Es wird für den Fachmann ersichtlich, daß auch bei der zweiten Verfahrensweise (gemäß den Ansprüchen 21 bis 23) verschiedene Maßnahmen im Rahmen des Verfahrensablaufes vorgenommen werden können, die auch im Rahmen der ersten Verfahrensweise (Ansprüche 1 bis 20) vorstehend beschrieben wurden.

Weitere Einzelheiten und Merkmale der erfindungsgemäßen Verfahren werden nachfolgend unter Bezugnahme auf die Zeichnung beschrieben. In der Zeichnung zeigt:
- Fig. 1: einen schematischen Querschnitt einer Schutzkappe mit Fensterfolie,
- Fig. 2A und Fig. 2B: schematisch einen Verfahrensablauf zur Herstellung einer Schutzkappe ähnlich derjenigen, die in Fig. 1 dargestellt ist, und
- Fig. 3: schematisch einen Teil einer Fertigungslinie zum Herstellen von Schutzkappen unter Prägen eines Ausgangsmaterials.

Aus Hygienegründen wird auf ein vorderes Ende eines nicht dargestellten Infrarot-Thermometers, das beispielsweise als Fieberthermometer einsetzbar ist, eine Schutzkappe 1 aufgesetzt, die neben ihrer Eigenschaft als Schutz gegen eine Verschmutzung des Eintrittsfensters des Strahlungsthermometers auch eine Wärmeisolation bildet. Um die Körpertemperatur einer Person zu messen, wird die Schutzkappe 1 auf das Strahlungsthermometer (nicht dargestellt) aufgesteckt und dann mit dem vorderen Ende 2 beispielsweise in einen Ohrkanal (nicht dargestellt) eingeführt, um die emittierte Infrarot-Strahlung zu messen.

Die Schutzkappe weist einen rohrförmigen Grundkörper 3 auf, der an dem unteren Ende 4 offen ist. An dem oberen bzw. vorderen Ende 2 ist ein Loch bzw. eine Öffnung 5 vorgesehen, die ein Strahlungs-Eintrittsfenster bildet und die vorteilhafterweise von einem Versteifungsring 20 umgeben ist.

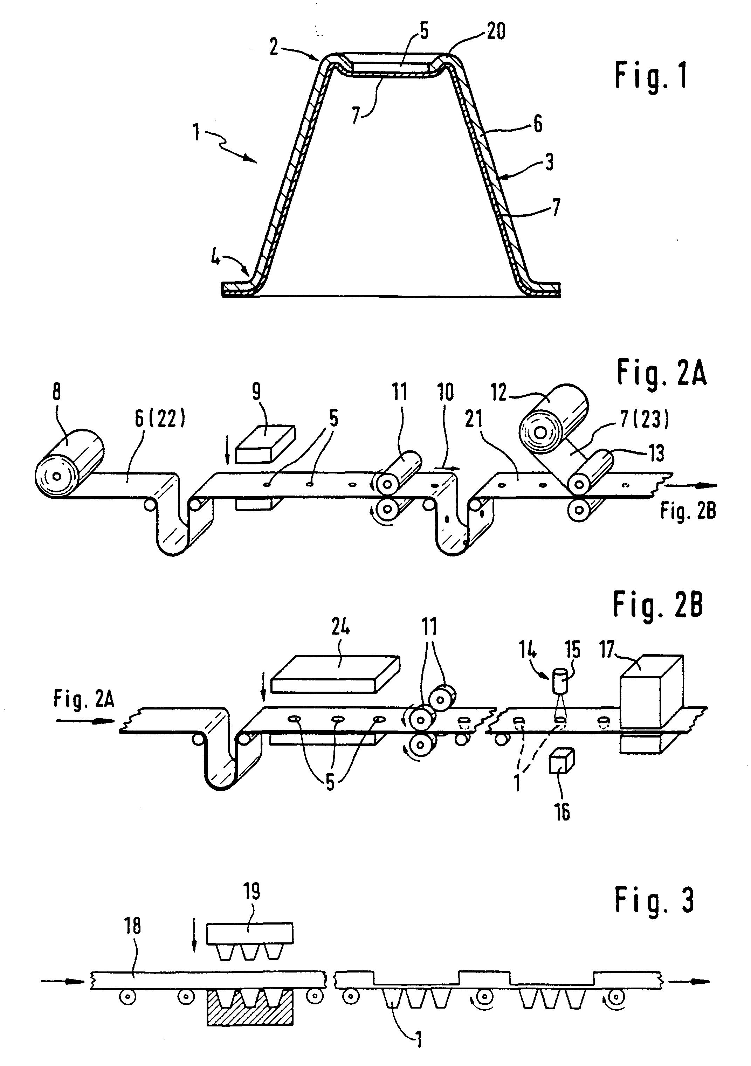

Wie in der Querschnittsdarstellung der Fig. 1 zu erkennen ist, ist die Schutzkappe 1 zweischichtig aufgebaut, und zwar aus einem Grundkörpermaterial 6 und einem Folien-material 7. Während das Grundkörpermaterial 6 den relativ formstabilen Grundkörper 3 bildet, ist in der Darstellung der Fig. 1 das Folien-Material 7 über die gesamte Innenoberfläche des Grundkörpers 3 gezogen und überspannt das Loch 5 und bildet so das Strahlungseintrittsfenster.

Um die Schutzkappe 1 verfahrensökonomisch in einer Fertigungslinie fortlaufend herzustellen, wird, wie in Fig. 2A dargestellt ist, geeignetes Band 22 Grundkörper-Material 6 von einer Vorratsrolle 8 abgezogen und einer Stanzeinrichtung 9 zugeführt. Als Grundkörper-Material wird vorzugsweise eine Polyethylen- oder Polystyrol-Folie mit einer Dicke im Bereich von 0,4 bis 0,8 mm zugeführt. In der Stanzeinrichtung 9 werden in das bandförmige Grundkörper-Material Löcher 5 fortlaufend eingestanzt, wobei es sich bei diesen Löchern 5 um solche handelt, die in der fertiggestellten Schutzkappe 1 das Loch 5 jeweils bilden, das das Strahlungs-Eintrittsfenster darstellt.

Während die Löcher 5 in dem Grundkörper-Material 6, das in Fig. 2A gezeigt ist, mit einem relativ großen Abstand zueinander beabstandet sind, sollte ersichtlich werden, daß diese Löcher unter einem sehr kurzen Abstand eingestanzt werden, bevorzugt mehrere solcher Löcher gleichzeitig während eines Stanzvorgangs, oder aber mehrere Reihen solcher Löcher 5 quer zur Vorrichtung (durch den Pfeil 10 angedeutet) eingebracht werden. Entlang der Fertigungslinie können mehrere Antriebswalzen 11, wie sie in den Figuren 2A und 2B schematisch dargestellt sind, vorgesehen werden, die teilweise, am Ende der Fertigungslinie, nur in den Rand des Materials 6 eingreifen.

Nach dem Einstanzen der Löcher in dem ersten Verfahrensschritt wird an einer zweiten Station in einem zweiten Schritt auf die Oberseite 21 des Grundkörper-Materials 6 ein Band 23 einer dünnen Fenster-Folie 7 aufgelegt, die von einer zweiten Vorratsrolle 12 abgewickelt wird. Als Fenster-Folie wird eine Polyethylen- oder Polypropylen-Folie, vorzugsweise mit einer Dicke von 20 bis 50 *µ*m, eingesetzt. Das Folien-Material 7 wird über Anpreßwalzen 13 an das Grundkörper-Material angedrückt und daran unter Wärmebeaufschlagung angeschweißt oder verklebt. Dieser Verbund in Form des Grundkörper- und des Folien-Materials 6, 7 wird dann einer Tiefziehstation 24, die in Fig. 2B schematisch dargestellt ist, zugeführt, an der im Bereich jedes Lochs 5 eine Schutzkappe tiefgezogen wird, mit einer Form, wie sie der Fig. 1 entspricht.

Diesem Verfahrensschritt 3, dem Tiefziehen folgend, wird das Band 22 in einem vierten Schritt an einer vierten Bearbeitungsstation einer Qualitätskontrolle unterzogen. Hierzu ist in der vierten Bearbeitungsstation 14 eine Infrarot-Strahlenquelle 15 vorgesehen, deren Strahlung auf den für die Temperaturmessung relevanten Wellenlängenbereich auf jede Öffnung 5, die mit dem Folien-Material 7 verschlossen ist, gerichtet wird. Unterhalb des Bands 22 ist ein Sensor 16 angeordnet, der die transmittierten Strahlungsanteile erfaßt. Falls die Transmissionseigenschaften der Fenster-Folie 7 nicht den Qualitätsanforderungen entsprechen, wird eine solche Schutzkappe 1 markiert und in der Endbearbeitungsstation 17, wo die Schutzkappe 1 von dem Band abgetrennt und auf Endabmessungen bearbeitet wird, nicht behandelt.

Während in dem Verfahrensablauf der Figuren 2A bis 2B das Folien-Material 7 auf diejenige Seite des Grundkörper-Materials 6 aufgebracht wird, die die Innenseite der Schutzkappe 1 bildet, wie dies in Fig. 1 gezeigt ist, kann das Folien-Material 7, das das Fenster 7 bildet, auch auf der gegenüberliegenden Seite, d.h. in den Figuren 2A und 2B auf der Unterseite des Grundkörper-Materials 6, aufgebracht werden, die die spätere Außenseite der Schutzkappe 1 bildet, so daß eine glatte Außenoberfläche erhalten wird.

Während in den Figuren 2A und 2B ein Verfahrensablauf dargestellt ist, in dem die Schutzkappe aus zwei Bahnenmaterialien 22, 23 gebildet wird, zum einen aus dem Grundkörper-Material 6 und zum anderen aus dem Folien-Material 7, ist in Fig. 3 schematisch ein Verfahrensablauf zum kontinuierlichen Herstellen von Schutzkappen dargestellt, bei dem nach der zweiten Erfindung nur ein einziges Bahnen-Material erforderlich ist. Gemäß Fig. 3 wird ein Grundkörper-Material 18 zugeführt, das sich gut prägen und/oder verformen läßt. Hierbei handelt es sich insbesondere um Polyethylen, das sich zum einen dazu eignet, daraus einen relativ formstabilen Grundkörper zu bilden, und das zum anderen auch dazu geeignet ist, in dem für eine Körpertemperaturmessung relevanten Bereich infrarote Strahlung zu transmittieren. Dieses Grundkörper-Material 18 wird dann unmittelbar einer Prägestation 19 zugeführt, an der, vorzugsweise in mehreren aufeinanderfolgenden Prägeschritten, das Material so verformt wird, daß ausgangsseitig der Prägestation aus dem Grundkörper-Material 18 einzelne Schutzkappen 1 herausgeformt sind, wobei das vordere Ende 2 der Schutzkappe 1, in dem das Fenster 7 gebildet ist, nach unten weist. In der Prägestation 19 kann die Schutzkappe 1 unter Bildung verschieden dicker Wandbereiche entsprechend den Vorgaben der Schutzkappe 1 gebildet werden, wobei im Bereich des Fensters 7 das Ausgangsmaterial 18 zu einer sehr dünnen Folie, d.h. der Fenster-Folie 7, verformt wird.

Es ist ersichtlich, daß in der Prägestation 19 zunächst das Ausgangsmaterial 18 nur prägend, auch in mehreren Schritten, profiliert werden kann. Die eigentliche rohr- oder becherförmige Form der Schutzkappe entsprechend der Fig. 1 wird dann in einem nachgeordneten Tiefziehschritt, wie er anhand der Fig. 2B erläutert ist, verformt. Einem solchen Tiefziehschritt folgend wird dann, entsprechend der Fig. 2B, eine Qualitätskontrolle und eine Bearbeitung auf Endabmessungen der einzelnen Schutzkappen vorgenommen.

## Patentansprüche

1. Verfahren zur Herstellung einer auf eine Ohrkanal-Temperaturmeßsonde eines Infrarot-Strahlungsthermometers aufsetzbaren becherförmigen Schutzkappe (1), die einen rohrförmigen Grundkörper (3) aus Kunststoff aufweist, dessen eines Ende offen und dessen gegenüberliegendes Ende mit einer für infrarote Strahlung durchlässigen Fenster-Folie (7) abgeschlossen ist, mit den folgenden Schritten:
Einbringen eines Lochs (5) in ein zur Bildung des Grundkörpers (3) vorgesehenes blatt-, folien-, bahnen- oder plattenförmiges Grundkörper-Material (6),
Bedecken und unverrückbares Verbinden des gelochten Grundkörper-Materials (6) wenigstens im Bereich des Lochs (5) mit einer Fenster-Folie (7) aus für infrarote Strahlung durchlässigem Kunststoff,
Verformen des Verbundkörpers zu einer Schutzkappe (1), und
gegebenenfalls Bearbeitung der Schutzkappe (1) auf Endabmessungen.

2. Verfahren nach Anspruch 1,
**dadurch gekennzeichnet,**
daß das Loch (5) in das Grundkörper-Material (6) gestanzt wird.

3. Verfahren nach Anspruch 1,
**dadurch gekennzeichnet,**
daß das gelochte Grundkörper-Material (6) und die Fenster-Folie (7) durch Schweißen unverrückbar miteinander verbunden werden.

4. Verfahren nach Anspruch 1,
**dadurch gekennzeichnet,**
daß das gelochte Grundkörper-Material (6) und die Fenster-Folie (7) durch Kleben unverrückbar miteinander verbunden werden.

5. Verfahren nach Anspruch 1,
**dadurch gekennzeichnet,**
daß das Grundkörper-Material (6) von einer ersten Vorratsrolle (8) abgewickelt und danach in einem ersten Schritt gelocht wird.

6. Verfahren nach Anspruch 1 oder 5,
**dadurch gekennzeichnet,**
daß die Fenster-Folie (7) von einer zweiten Vorratsrolle (12) abgewickelt und in einem zweiten Schritt mit dem gelochten Grundkörper-Material (6) verbunden wird.

7. Verfahren nach Anspruch 5,
**dadurch gekennzeichnet,**
daß das Grundkörper-Material (6) als Band zugeführt wird, wobei in dem ersten Schritt eine Folge von Löchern (5) eingebracht wird, und nach der Verformung die hergestellten Schutzkappen in einem weiteren Schritt von dem Band abgetrennt werden.

8. Verfahren nach Anspruch 1,
**dadurch gekennzeichnet,**
daß als Grundkörper-Material (6) eine Folie (7) mit einer Dicke im Bereich von 0,4 bis 0,8 mm verwendet wird.

9. Verfahren nach Anspruch 1,
**dadurch gekennzeichnet,**
daß eine Fenster-Folie (7) mit einer Dicke im Bereich von 20 bis 50 *µ*m verwendet wird.

10. Verfahren nach Anspruch 1 oder 6,
**dadurch gekennzeichnet,**
daß die Fenster-Folie (7) auf die Oberseite (21) des Grundkörper-Materials (6) aufgebracht wird und nach der Verformung einen Innenüberzug der Schutzkappe bildet.

11. Verfahren nach Anspruch 1,
**dadurch gekennzeichnet**,
daß als Grundkörper-Material (6) eine Folie aus Kunststoff, insbesondere Polyethylen oder Polystyrol, verwendet wird.

12. Verfahren nach Anspruch 1
**dadurch gekennzeichnet,**
daß als Fenster-Folie (7) eine solche aus der Gruppe der Polyethylene oder Polypropylene verwendet wird.

13. Verfahren nach Anspruch 1,
**dadurch gekennzeichnet,**
daß in einem dritten Schritt durch Tiefziehen die Schutzkappe (1) geformt wird.

14. Verfahren nach Anspruch 1,
**dadurch gekennzeichnet,**
daß als Grundkörper-Material (6) ein wärmeisolierendes Material eingesetzt wird.

15. Verfahren nach Anspruch 14,
**dadurch gekennzeichnet,**
daß als wärmeisolierendes Material Schaumstoff eingesetzt wird.

16. Verfahren nach einem der Ansprüche 1, 14 oder 15,
**dadurch gekennzeichnet,**
daß der Verformungsschritt durch Prägen vorgenommen wird.

17. Verfahren nach Anspruch 1
**dadurch gekennzeichnet**,
daß vor der Bearbeitung auf Endabmessungen eine Qualitätsprüfung durchgeführt wird.

18. Verfahren nach Anspruch 17,
**dadurch gekennzeichnet,**
daß die Fenster-Folie (7) hinsichtlich ihrer Durchlässigkeit in dem für die Temperaturmessung relevanten Infrarot-Strahlungsbereich geprüft wird.

19. Verfahren nach Anspruch 1,
**dadurch gekennzeichnet,**
daß entlang des Randes des mit der Fenster-Folie abgeschlossenen Lochs eine
ringförmige Verstärkung (20) geformt wird.

20. Verfahren nach Anspruch 19,
**dadurch gekennzeichnet,**
daß die ringförmige Verstärkung (20) während des Verformungs-Schritts gebildet wird.

21. Verfahren zur Herstellung einer auf eine Ohrkanal-Temperaturmeßsonde eines Infrarot-Strahlungsthermometers aufsetzbaren becherförmigen Schutzkappe (1), die einen rohrförmigen Grundkörper (3) aus Kunststoff aufweist, dessen eines Ende offen und dessen gegenüberliegendes Ende mit einer für infrarote Strahlung durchlässigen Fenster-Folie (7) abgeschlossen ist, mit den folgenden Schritten:
Verdünnen eines zur Bildung des Grundkörpers (3) vorgesehenen blatt-, folien-, bahnen- oder plattenförmigen Grundkörper-Materials (6) durch Prägen in einem vorgegebenen Bereich, der der zu bildenden Fenster-Folie (7) zugeordnet ist,
Verformen des Grundkörper-Materials (6) durch Tiefziehen oder Prägen zu einer Schutzkappe (1),
und gegebenenfalls Bearbeitung der Schutzkappe (1) auf Endabmessungen.

22. Verfahren nach Anspruch 21,
**dadurch gekennzeichnet,**
daß der vorgegebene Bereich in mehreren Prägestufen verdünnt wird.

23. Verfahren nach Anspruch 22,
**dadurch gekennzeichnet,**
daß die Verdünnung des vorgegebenen Bereichs auf die Enddicke der Fenster-Folie (7) im Rahmen des Tiefziehens oder Prägens durchgeführt wird.

## Claims

1. A process for manufacturing a funnel-shaped protective cap (1) which is adapted to be fitted to an ear canal temperature measurement probe of an infrared radiation thermometer and includes a tubular base body (3) made of plastic material having its one end open and its opposite end closed by a window film (7) transparent to infrared radiation, comprising the following steps:
making a hole (5) in a sheet-, film-, web- or plate-shaped base body material (6) intended to form the base body (3),
covering and immovably joining the perforated base body material (6) at least in the area of the hole (5) with a window film (7) fabricated from a plastic material transparent to infrared radiation,
shaping the composite body into a protective cap (1),
and, where applicable, processing the protective cap (1) to final dimensions.

2. The process as claimed in claim 1,
**characterized in that** the hole (5) is punched into the base body material (6).

3. The process as claimed in claim 1,
**characterized in that** the perforated base body material (6) and the window film (7) are joined together in an immovable manner by welding.

4. The process as claimed in claim 1,
**characterized in that** the perforated base body material (6) and the window film (7) are joined together in an immovable manner by adhesive bonding.

5. The process as claimed in claim 1,
**characterized in that** the base body material (6) is unwound from a first supply roll (8) and subsequently punched in a first step.

6. The process as claimed in claim 1 or 5,
**characterized in that** the window film (7) is unwound from a second supply roll (12) and joined to the perforated base body material (6) in a second step.

7. The process as claimed in claim 5,
**characterized in that** the base body material (6) is fed as a web, with a sequence of holes (5) being made in the first step, and that following the forming operation the protective caps thus fabricated are severed from the web in a further step.

8. The process as claimed in claim 1,
**characterized in that** the base body material (6) used is a film (7) of a thickness in the range from 0.4 to 0.8 mm.

9. The process as claimed in claim 1,
**characterized in that** a window film (7) with a thickness in the range from 20 to 50 µm is used.

10. The process as claimed in claim 1 or 6,
**characterized in that** the window film (7) is applied to the upper side (21) of the base body material (6) to form an inside coating on the protective cap following the forming operation.

11. The process as claimed in claim 1,
**characterized in that** the base body material (6) utilized is a film made of plastic material, in particular polyethylene or polystyrene.

12. The process as claimed in claim 1,
**characterized in that** the window film (7) used is made of a material selected from the group consisting of polyethylene or polypropylene.

13. The process as claimed in claim 1,
**characterized in that** the protective cap (1) is formed by deep-drawing in a third step.

14. The process as claimed in claim 1,
**characterized in that** the base body material (6) utilized is a thermally insulating material.

15. The process as claimed in claim 14,
**characterized in that** the thermally insulating material utilized is foamed plastic.

16. The process as claimed in any one of the claims 1, 14 or 15,
**characterized in that that** the forming step is a stamping operation.

17. The process as claimed in claim 1,
**characterized in that** the step of processing to final dimensions is preceded by an inspection operation.

18. The process as claimed in claim 17,
**characterized in that** the window film (7) is checked for its transmissivity in the infrared radiation range relevant for the temperature measurement.

19. The process as claimed in claim 1,
**characterized in that** an annular stiffening (20) is formed along the edge of the hole covered with the window film.

20. The process as claimed in claim 19,
**characterized in that** the annular stiffening (20) is formed during the forming step.

21. A process for manufacturing a funnel-shaped protective cap (1) which is adapted to be fitted to an ear canal temperature measurement probe of an infrared radiation thermometer and includes a tubular base body (3) made of plastic material having its one end open and its opposite end closed by a window film (7) transparent to infrared radiation, comprising the following steps:
thinning a sheet-, film-, web- or plate-shaped base body material (6) intended to form the base body (3) by stamping in a predetermined area associated with the window film (7) to be formed,
shaping the base body material (6) into a protective cap (1) by a deep-drawing or stamping operation,
and, where applicable, processing the protective cap (1) to final dimensions.

22. The process as claimed in claim 21,
**characterized in that** the predetermined area is thinned in several stamping steps.

23. The process as claimed in claim 22,
**characterized in that** the operation of thinning the predetermined area to the final thickness of the window film (7) is performed as part of the deep-drawing or stamping operations.

## Revendications

1. Procédé pour fabriquer un capuchon de protection en forme de pot (1), qui peut être appliqué sur une sonde de mesure de température placée dans le conduit auditif et comporte un corps de base tubulaire (3) en matière plastique, dont une extrémité est ouverte et dont l'extrémité opposée est fermée par une feuille formant fenêtre (7), qui est transparente pour le rayonnement infrarouge, comprenant les étapes suivantes:
aménagement d'un trou (5) dans un matériau formant corps de base (6) en forme de feuille, de nappe, de bande ou de plaque, prévu pour former le corps de base (3),
recouvrement et liaison inamovible du matériau perforé (6) du corps de base, au moins dans la zone du trou (5), avec une feuille formant fenêtre (7) formée d'une matière plastique transparente pour le rayonnement infrarouge,
mise en forme du corps composite sous la forme d'un capuchon de protection (1), et
éventuellement usinage du capuchon de protection (1) pour l'obtention de dimensions finales.

2. Procédé selon la revendication 1, caractérisé en ce
que le trou (5) est formé par poinçonnage dans le matériau (6) du corps de base.

3. Procédé selon la revendication 1, caractérisé en ce
que le matériau perforé (6) du corps de base et la feuille formant fenêtre (7) sont reliés entre eux d'une manière inamovible, par soudage.

4. Procédé selon la revendication 1, caractérisé en ce
que le matériau perforé (6) du corps de base et la feuille formant fenêtre (7) sont reliés entre eux d'une manière inamovible par collage.

5. Procédé selon la revendication 1, caractérisé en ce
que le matériau perforé (6) du corps de base est déroulé d'un premier rouleau débiteur (8) et ensuite est perforé en une première étape opératoire.

6. Procédé selon la revendication 1 ou 5, caractérisé en ce
que la feuille formant fenêtre (7) est déroulée d'un second rouleau débiteur (12) et est reliée, lors d'une seconde étape opératoire, au matériau perforé (6) du corps de base.

7. Procédé selon la revendication 5, caractérisé en ce
que le matériau (6) du corps de base est amené sous la forme d'une bande, et lors de la première étape, une suite de trous (5) sont formés et, après le formage, les capuchons de protection fabriqués sont séparés de la bande, lors d'une étape opératoire suivante.

8. Procédé selon la revendication 1, caractérisé en ce
qu'on utilise comme matériau (6) pour le corps de base une feuille (7) ayant une épaisseur située dans la gamme comprise entre 0,4 et 0,8 mm.

9. Procédé selon la revendication 1, caractérisé en ce
qu'on utilise une feuille formant fenêtre (7) d'une épaisseur située dans la gamme comprise entre 20 et 50 µm.

10. Procédé selon la revendication 1 ou 6, caractérisé en ce
qu'on dispose la feuille formant fenêtre (7) sur la face supérieure (21) du matériau (6) du corps de base et qu'après le formage, cette feuille forme un revêtement intérieur du capuchon de protection.

11. Procédé selon la revendication 1, caractérisé en ce
qu'on utilise comme matériau (6) du corps de base une feuille de matière plastique, notamment de polyéthylène ou de polystyrène.

12. Procédé selon la revendication 1, caractérisé en ce
qu'on utilise comme feuille formant fenêtre (7) une feuille du groupe du polyéthylène ou du polypropylène.

13. Procédé selon la revendication 1, caractérisé en ce
qu'on forme le capuchon de protection (1) par emboutissage lors d'une troisième opératoire.

14. Procédé selon la revendication 1, caractérisé en ce
qu'on utilise comme matériau (6) pour le corps de base un matériau réalisant une isolation thermique.

15. Procédé selon la revendication 14, caractérisé en ce
qu'on utilise une mousse comme matériau réalisant une isolation thermique.

16. Procédé selon l'une des revendications 1, 14 ou 15, caractérisé en ce
qu'on exécute l'étape de formage par gaufrage.

17. Procédé selon la revendication 1, caractérisé en ce
qu'avant l'usinage aboutissant aux dimensions finales, on exécute un contrôle de qualité.

18. Procédé selon la revendication 17, caractérisé en ce
que l'on contrôle la transparence de la feuille formant fenêtre (7) dans la plage du rayonnement infrarouge qui est importante pour la mesure de températures.

19. Procédé selon la revendication 1, caractérisé en ce
que le long du bord du trou fermé par la feuille formant fenêtre, on forme un élément de renforcement annulaire (20).

20. Procédé selon la revendication 19, caractérisé en ce
qu'on forme l'élément de renforcement annulaire (20) lors de l'étape de formage.

21. Procédé pour fabriquer un capuchon de protection en forme de pot (1), qui peut être appliqué sur une sonde de mesure de température placée dans le conduit auditif comporte un corps de base tubulaire (3) en matière plastique, dont une extrémité est ouverte et dont l'extrémité opposée est fermée par une feuille formant fenêtre (7), qui est transparente pour le rayonnement infrarouge, comprenant les étapes suivantes:
amincissement d'un matériau (6) formant corps de base en forme de feuille, de nappe, de bande ou de plaque, prévu pour former le corps de base (3), par gaufrage dans une partie prédéterminée qui est associée à la feuille formant fenêtre (7) devant être formée;
formage du matériau (6) du corps de base par emboutissage ou gaufrage pour former un capuchon de protection (1), et
éventuellement usinage du capuchon de protection (1) pour l'obtention de dimensions finales.

22. Procédé selon la revendication 21, caractérisé en ce
qu'on amincit la partie prédéterminée en plusieurs étapes de gaufrage.

23. Procédé selon la revendication 22, caractérisé en ce
qu'on exécute l'amincissement de la partie prédéterminée en amenant l'épaisseur finale de la feuille formant fenêtre (7) dans le cadre de l'emboutissage ou du gaufrage.
